# EUROPÄISCHE PATENTSCHRIFT

(11) **EP 2 444 137 B1**
(45) Veröffentlichungstag und Bekanntmachung des Hinweises auf die Patenterteilung: **20.06.2018**
(21) Anmeldenummer: 11007387.1
(22) Anmeldetag: 10.09.2011
(51) Int. Cl.: B01D 29/15, B01D 29/96, B01D 35/30, B01D 29/21

(54) **FILTERGEHÄUSE FÜR EINEN FILTER UND FILTER MIT EINEM DERARTIGEN FILTERGEHÄUSE**
FILTER HOUSING FOR A FILTER AND FILTER WITH SUCH A FILTER HOUSING
BOÎTIER DE FILTRE POUR UN FILTRE ET FILTRE DOTÉ D'UN TEL BOÎTIER DE FILTRE

(30) Priorität: 23.10.2010 DE 102010049419
(43) Veröffentlichungstag der Anmeldung: 25.04.2012
(73) Patentinhaber: Robert Bosch GmbH, 70469 Stuttgart (DE)
(72) Erfinder: Hausdorf, Jürgen, 67166 Otterstadt (DE); Otto, Konrad, 68723 Schwetzingen (DE)
(74) Vertreter: Thürer, Andreas

(56) Entgegenhaltungen:
- WO-A1-02/078816
- WO-A1-2009/017733
- WO-A2-2004/033067
- DE-A1- 10 107 466
- US-A1- 2004 188 346

## Beschreibung

Die vorliegende Erfindung betrifft ein Filtergehäuse für einen Filter, insbesondere einer Hydraulikanlage, nach dem Oberbegriff des Patentanspruchs 1 sowie einen Filter mit einem derartigen Filtergehäuse.

Ein derartiges Filtergehäuse und ein bekannter Filter sind z.B. in der DE 43 10 492 A1 gezeigt. Das Filtergehäuse hat einen Filtertopf zur Aufnahme eines Filterelementes und einen Filterkopf zum Verschließen des Filtertopfes sowie zur Ausbildung eines Fluidzulaufanschlusses und eines Fluidzulaufabschlusses. Das Filterelement ist rohrartig ausgebildet und an seinem von dem Filterkopf entfernt liegenden Endabschnitt über eine Endscheibe verschlossen. Es ist an einer filterkopfseitigen zapfenartigen Elementenaufnahme eingespannt und erstreckt sich in Richtung eines von dem Filtertopf gebildeten Filterboden. Der Zulaufanschluss mündet über einen Zulaufkanal in einen von einer Außenumfangsfläche des Filterelementes und dem Filtergehäuse begrenzten Zulaufraum, aus dem zu filterndes Fluid etwa radial in das Filterelement einströmt. Der Ablaufanschluss erstreckt sich von einem Ablaufkanal, der mit einem von einer Innenumfangsfläche des Filterelementes gebildeten Ablaufraum verbunden ist, aus dem das gefilterte Fluid abströmt. Beim Einbau des Filterelementes in den Filtertopf kann die Endscheibe des Filterelementes auf dem Filterboden des Filtertopfes anliegen, wobei durch die kalottenartige Ausbildung des Filterbodens ein Hohlraum zwischen dem Filterboden und der Endscheibe gebildet wird. Je nach Betriebsbedingungen kann somit beim Einschalten der Hydraulikanlage das zu filtrierende Fluid nicht in den Hohlraum eindringen, wodurch der Hohlraumdruck annähernd auf dem Niveau des Umgebungsdruckes verweilt. Im Ablaufraum des Filterelementes liegt dagegen der Betriebsdruck der Hydraulikanlage abzüglich des Druckverlustes nach dem Durchströmen des Filterelementes an. Hierdurch bildet sich eine Druckdifferenz zwischen dem Ablaufraum des Filterelementes und dem Hohlraum aus, der in Abhängigkeit der Höhe des Betriebsdruckes und der Stabilität der Entscheibe zu einer dauerhaften Beschädigung derselben führt.

Um zumindest einen Druckausgleich zwischen dem Zulaufraum und dem Hohlraum zu ermöglichen, sieht eine bekannte Lösung vor, axial verkürzte Filterelemente zu verwenden und diese über eine Druckfeder, die sich am Filterboden abstützt und an der Filterelementenendscheibe angreift von dem Filterboden zu beabstanden. Aus Kostengründen wird jedoch häufig auf eine derartige Druckfeder verzichtet, wodurch sich das verkürzte Filterelement vom filterkopfseitigen Anschlusszapfen lösen kann und ein Bypass für ungefiltertes Fluid geschaffen wird.

Eine weitere bekannte Lösung sieht vor, in die Endscheibe Druckentlastungskerben einzubringen. Die Einbringung der Druckentlastungskerben erfordert jedoch einen zusätzlichen Arbeitsschritt bei der Filterelementenherstellung.

Aufgabe der Erfindung ist es, ein Filtergehäuse für einen Filter, insbesondere einer Hydraulikanlage, das die vorgenannten Nachteile beseitigt und fertigungstechnisch einfach herzustellen ist, sowie einen Filter mit einem derartigen Filtergehäuse zu schaffen.

In den Dokumenten WO 2004/033067 A2, WO 02/078816 A1 und WO 2009/017733 A1 sind weitere Ausführungsformen von Filtergehäusen und Filtern offenbart.

Diese Aufgabe wird gelöst durch ein Filtergehäuse mit den Merkmalen des Patentanspruchs 1 und durch einen Filter mit den Merkmalen des Patentanspruchs 5. Ein erfindungsgemäßes Filtergehäuse für einen Filter, insbesondere einer Hydraulikanlage, hat einen Filtertopf zur Definierung eines Innenraums zur Aufnahme eines Filterelementes zum Abscheiden von festen Partikeln aus einem Fluid, einen Filterkopf zum Verschließen des Innenraums, und einen Zulaufanschluss zur Zuführung des zu filternden Fluids in den Innenraum und einen Ablaufanschluss zur Entnahme des gefilterten Fluids aus dem Innenraum. Erfindungsgemäß hat der Filtertopf bodenseitig in den Innenraum ragende Körperabschnitte zur Auflage des Filterelementes.

Durch die erfindungsgemäßen Körperabschnitte werden Durchlässe zwischen einem radial außenliegenden Fluidzulaufraum und einem bodenseitigen Hohlraum des Filterelements gebildet, wodurch ein Druckausgleich zwischen diesen beiden Räumen erfolgen kann und
somit eine eine bodenseitige Beschädigung des Filterelements bewirkende Druckdifferenz zwischen einem radial innenliegenden Fluidablaufraum und dem Hohlraum verhindert wird. Ein aufwendige Modifikation der Filterelemente im Endscheibenbereich oder die Verwendung von bodenseitigen Stützfedern ist bei der erfindungsgemäßen Lösung nicht notwendig. Zudem wird das Fluid bei einer in der Patentanmeldung der Anmelderin DE 10 2009 037 736 beschriebenen und beanspruchten schraubenförmigen Zirkulationsbewegung in dem Zulaufraum im Bereich der Körperabschnitte beruhigt, was zu einer Sedimentation der abgeschiedenen festen Partikel im Hohlraum führt und somit eine Belastung des Filterelementes verringert. Die Körperabschnitte sind Einprägungen eines Filterbodens des Filtertopfes in Richtung des Innenraums. Die Einprägungen, die von außen betrachtet eine sickenartige Gestalt haben, sind fertigungstechnisch einfach in den Filterboden einzubringen und erlauben zudem eine Nachrüstung herkömmlicher Filtertöpfe. Ferner erlaubt diese Formgebung des Filterbodens ein leichtes Lösen des Filtertopfes auch ohne Werkzeug, da der Filterboden außenumfangsseitig konturiert ist.

Zur Vergleichmäßigung der Fluidströmung im Bereich des Filterbodens innerhalb des Filtertopfes sieht ein Ausführungsbeispiel vor, die Körperabschnitte identisch auszubilden und gleichmäßig voneinander zu beabstanden.

Eine kippsichere und stabile Anlage des Federelements ist zu erreichen, wenn drei Körperabschnitte ausgebildet sind.

Bei einem Ausführungsbeispiel weist der Filterkopf einen integralen rohrartigen Anschlusszapfen zum abschnittsweisen Aufschieben des Filterelementes auf.
Die integrale Ausbildung des Anschlusszapfens führt insbesondere zu einer vereinfachten Montage des Filtergehäuses und zu einer Erhöhung der Robustheit, da weniger Teile montiert werden müssen und eine potentielle Leckage verhindert wird.

Ein erfindungsgemäßer Filter, insbesondere einer Hydraulikanlage, zum Abscheiden von festen Partikeln aus einem Fluid hat ein erfindungsgemäßes Filtergehäuse und ein Filterelement, das im Innenraum des Filtergehäuses aufgenommen ist. Ein derartiger Filter weist druckausgeglichene bzw. nahezu druckausgeglichene Teilinnenräume auf und ist aufgrund der Konturierung des Filterbodens ohne Werkzeug zu öffnen. Ferner wird durch die erfindungsgemäße Lagerung des Filterelements ein Verklemmen desselben im Filtertopf verhindert.

Vorzugsweise ist in dem Innenraum ein Federelement zum Andrücken des Filterelementes gegen die Körperabschnitte vorgesehen. Das Filterelement ist durch das Federelement gegen Bewegungen aufgrund von Strömungseinflüssen wie Turbulenzen und Pumpenschwankungen gesichert. Ferner dient das Federelement zum Ausgleich von Bauteil- und Montagetoleranzen.

Auf die festen Partikel kann eine radial nach außen wirkende Zentrifugalkraft wirken.

Bei einem bevorzugten Ausführungsbeispiel wird das Fluid im Zulaufraum mit einem Drall beaufschlagt, der eine schraubenförmige Zirkulationsbewegung und somit eine radial nach außen auf die festen Partikel im Fluid wirkende Zentrifugalkraft bewirkt. Dieses Ausführungsbeispiel hat den Vorteil, dass das Filterelement durch eine tangentiale Beschleunigung des Fluids besser umströmt wird, wodurch die Partikel gleichmäßiger von dem Filterelement ausgefiltert werden können und einseitige Partikelrückstände am Filterelement vermieden sind. Des Weiteren können Partikel in dem Fluid durch die Zentrifugalkraft unabhängig von dem Filterelement aus diesem gefiltert werden.

Sonstige vorteilhafte Ausführungsbeispiele der Erfindung sind Gegenstand weiterer Unteransprüche.

Im Folgenden wird ein erfindungsgemäßes Ausführungsbeispiel der Erfindung anhand vereinfachter schematischer Darstellungen näher erläutert. Es zeigen:
Figur 1 einen Längsschnitt durch einen erfindungsgemäßen Filter,
Figur 2 eine perspektivische Detaildarstellung eines in Figur 1 gezeigten Federelementenbereichs,
Figuren 3 und 4 perspektive Ansichten eines in Figur 1 gezeigten Filterbodens, und
Figuren 5 und 6 Schnitte durch den mit einem Filterelement versehenen Filter aus Figur 1 im Bereich des Filterbodens.

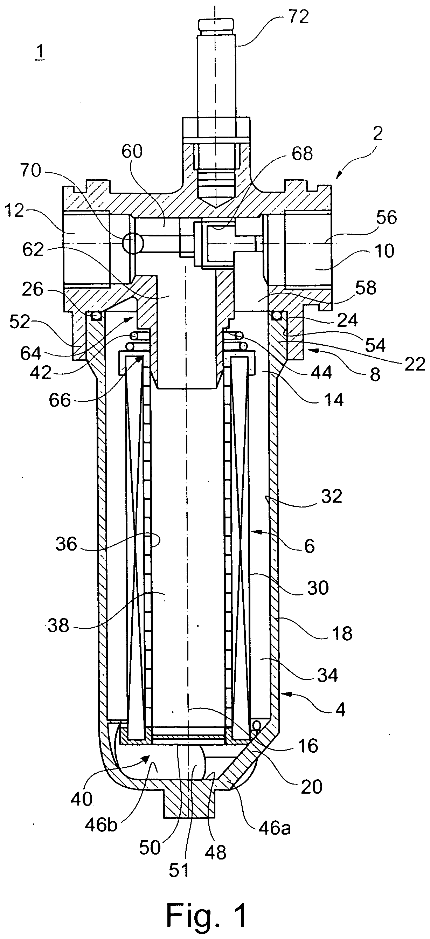

In Figur 1 ist ein Vollschnitt eines erfindungsgemäßen Filters in Form eines hydraulischen Leitungsfilters 1 gezeigt. Ein derartiger Leitungsfilter 1 wird beispielsweise als Hauptstromfilter unmittelbar stromabwärts einer Hydropumpe zum Filtern eines gesamten Druckmittelvolumenstroms der Hydropumpe angeordnet. Er kann jedoch auch in einem hydraulischen Teilkreislauf stromaufwärts vor einem hydraulischen Gerät angeordnet sein.

Der Leitungsfilter 1 hat ein Filtergehäuse 2 mit einem Filtertopf 4 zur Aufnahme eines Filterelementes 6 und einen Filterkopf 8 mit einem Zulaufanschluss 10 und einem Ablaufanschluss 12.

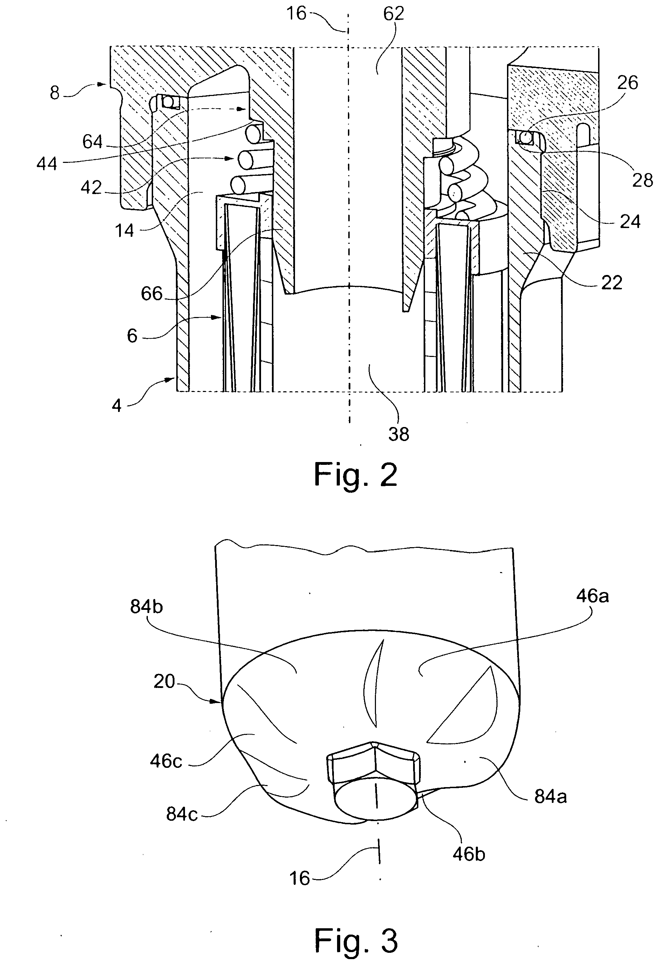

Der Filtertopf 4 weist zur Aufnahme des Filterelementes 6 einen Innenraum 14 auf, der von einer entlang einer Filterlängsachse 16 verlaufenden Wandung 18 und einem kalottenartigen Filterboden 20 gebildet wird. Ein von dem Filterboden 20 entfernt liegender und somit öffnungsseitig angeordneter Wandungsabschnitt 22 ist radial erweitert und mit einem Außengewinde 24 zur Herstellung einer Schraubverbindung mit dem Filterkopf 8 zum Verschließen des Innenraums 14 versehen. Stirnseitig ist wie insbesondere in Figur 2 beziffert in dem Wandungsabschnitt 22 ein in eine Stirnnut 28 eingesetzter Dichtring 26 zur fluiden Abdichtung des Innenraums 14 angeordnet.

Das Filterelement 6 hat eine rohrartige Gestalt und erstreckt sich entlang der Filterlängsachse 16. Es hat eine Außenumfangsfläche 30, die mit einer gegenüber liegenden Innenwandungsfläche 32 des Filtertopfes 4 einen Zulaufraum 34 definiert, und eine Innenumfangsfläche 36, die einen Ablaufraum 38 radial begrenzt. Axial wird der Ablaufraum 38 bzw. das Filterelement 6 durch eine Endscheibe 40 begrenzt, die beispielsweise mit dem Filterelement 6 verklebt ist. Es ist über ein Federelement 42, das sich an einer filterkopfseitigen Schulterfläche 44 abstützt und stirnseitig am Filterelementes 6 angreift, mit seiner Endscheibe 40 gegen drei in den Innenraum 14 ragende Körperabschnitte 46a, 46b des Filterbodens 20 gedrückt, von denen lediglich zwei sichtbar sind und die in den Figuren 3 bis 6 näher beschrieben werden. Durch diese Auflage bzw. Anlage des Filterelements 6 am Filterboden 20 ist zwischen einer konkaven Bodenfläche 48 des Filterbodens 20 und einer gegenüberliegenden Endscheibenfläche 50 ein stirnseitiger Aufnahmeraum 51 gebildet Der Filterkopf 8 zum Verschließen des Innenraums 14 hat einen Kragen 52, an dem ein mit dem Außengewinde 24 des Filtertopfes 4 zusammenwirkendes Innengewinde 54 zur Herstellung der Schraubverbindung zwischen dem Filterkopf 8 und dem Filtertopf 4 ausgebildet ist.

Der Zulaufanschluss 10 und der Zulaufanschluss 12 bilden eine gemeinsame Anschlussachse 56, die sich senkrecht zur Filterlängsachse 16 erstreckt. Der Zulaufanschluss 10 mündet endseitig in einen Zulaufkanal 58, der sich in den Zulaufraum 34 erstreckt.

Der Ablaufanschluss 12 erstreckt sich von einem radial verjüngten Ablaufkanal 60, der über einen radialen Verbindungskanal 62 mit dem Ablaufraum 38 in Fluidverbindung steht. Der Verbindungskanal 62 wird von einem rohrartigen Anschlusszapfen 64 gebildet, der einstückig mit dem Filterkopf 8 ausgebildet ist und von dem Kragen 52 umgegriffen ist.

Der Anschlusszapfen 64 verläuft axial zur Filterlängsachse 16 in Richtung des Filterbodens 20 und erstreckt sich dabei in axialer Richtung über den Kragen 52 hinaus. Er hat einen freien Endabschnitt 66, der zur Bildung der Schulterfläche 44 außenumfangsseitig radial zurückgestuft ist und von dem Federelement 42 und dem Filterelementen 6 umgriffen ist. Wie insbesondere in Figur 2 zu erkennen ist, weist der Anschlusszapfen 64 zur vereinfachten Positionierung des Filterelements 6 am freien Endabschnitt 66 einen konisch auslaufenden Außenumfang auf.

Bei Ansteigen des Druckes im Zulaufkanal 58 aufgrund von zu hoher Verschmutzung des Filterelementes 6 ist in einer Wandbohrung 68 zwischen dem Zulaufkanal 58 und dem Ablaufkanal 60 ein Bypassventil 70 vorgesehen, welches sich bei zu hohem Druck öffnet und ein Eintreten des unfiltrierten Mediums in den Ablaufkanal 10 ermöglicht.
Um dies zu verhindern ist oberhalb des Bypassventils 70 in Figur 1 in dem Filterkopf 8 eine Aufnahme für einen Verschmutzungsanzeiger 72 vorgesehen, welcher die Drücke im Zulaufkanal 58 und Ablaufkanal 60 misst und bei zu hoher Druckdifferenz anzeigt, dass das Filterelement 6 verschmutzt ist und ausgetauscht werden sollte.

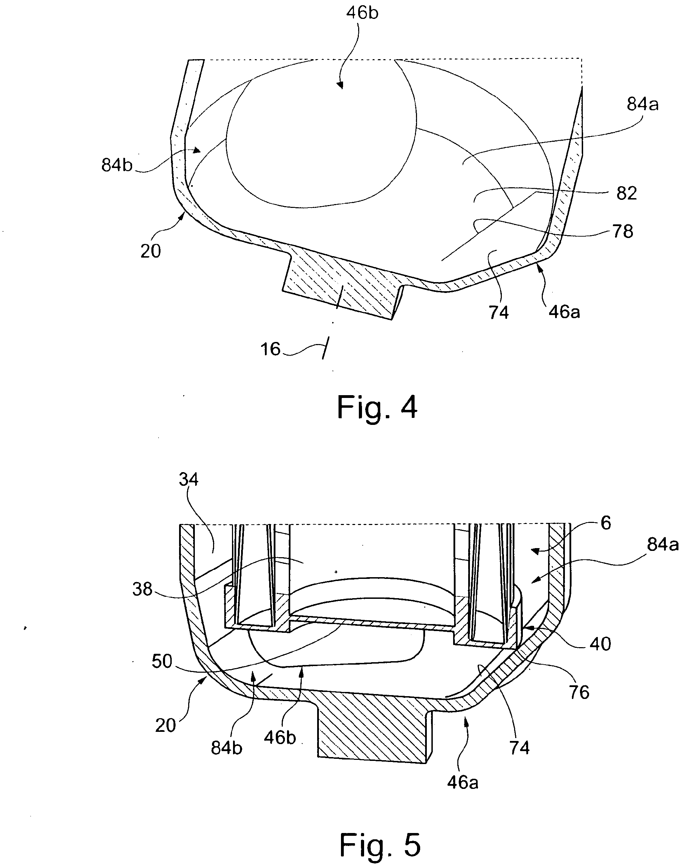

Gemäß den Darstellungen in den Figuren 3 und 4 sind in dem Filterboden 20 drei Körperabschnitte 46a, 46b, 46c zur Auflage des Filterelementes 6 ausgebildet. Sie sind gleichmäßig zueinander um die Filterlängsachse 16 positioniert und als außenseitig in den Filterboden 20 eingebrachte Einprägungen bzw. Sicken ausgebildet, wodurch der Filterboden 20 konturiert ist. Die Körperabschnitte 46a, 46b, 46c bilden mit ihren Stirnflächen 74 jeweils Auflagebereiche für das Filterelement 6 bzw. die Filterelementenendscheibe 40. Mit ihren benachbarten und gegenüberliegenden Seitenflanken 78, 80 begrenzen sie in Kombination mit einem sich zwischen den Seitenflanken 78, 80 erstreckenden Bodenflächenabschnitt 82 jeweils Durchlässe 84a, 84b, 84c zur Ermöglichung einer Fluidverbindung zwischen dem Zulaufraum 34 und dem Aufnahmeraum 51. Vorzugsweise sind die Körperabschnitte 46a, 46b, 46c derart in dem Filterboden 20 eingebracht, dass sie ein gleiches Volumen wie die Durchlässe 84a, 84b, 84c aufweisen.

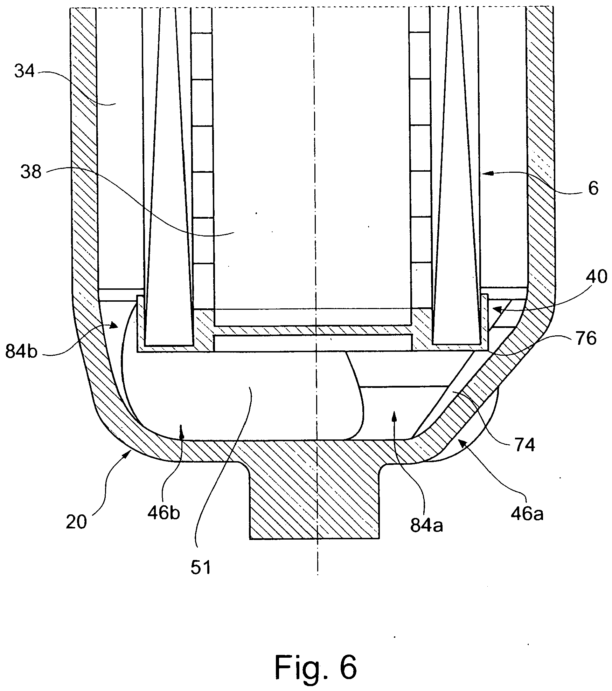

Wie in den Figuren 5 und 6 beispielhaft an dem Körperabschnitt 46a und den Durchlass 84a gezeigt, liegt das Filterelement 6 mit einer Außenkante 76 der Endscheibe 40 an der Stirnfläche 74 der jeweiligen Körperabschnitte 46a, 46b, 46c an und überbrückt dabei die Durchlässe 84a, 84b, 84c so dass zum einen ein Druckausgleich zwischen dem Zulaufraum 34 und dem Aufnahmeraum 51 erfolgen kann, wodurch eine Druckdifferenz zwischen dem Ablaufraum 38 und dem Aufnahmeraum 51 eliminiert bzw. vernachlässigbar ist. Zum anderen bewirken die Körperabschnitte 46a, 46b, 46c bei einer in der Patentanmeldung der Anmelderin DE 10 2009 037 736 beschriebenen und beanspruchten schraubenförmigen Zirkulationsbewegung des Fluids in dem Zulaufraum 34 eine bodenseitige Beruhigung dieser zwangsgeführten Strömung, wodurch das Ausströmen des Fluids aus dem Zulaufraum 34 in den Aufnahmeraum 51 erschwert wird. Hierdurch wird eine beruhigte bodenseitige Strömungszone ausgebildet, was zu einer Sedimentation an Verschmutzung führen und somit die Belastung des Filterelementes 6 verringern kann.

Offenbart ist ein Filtergehäuse für einen Filter gemäß Anspruch 1,
insbesondere einer Hydraulikanlage, das einen von einem Fluidzulaufanschluss und einem Fluidablaufanschluss entfernt liegenden Filterboden hat, der in einen Innenraum des Filtergehäuses ragende Körperabschnitte zur Anlage eines Filterelementes aufweist, sowie ein Filter mit einem derartigen Filtergehäuse.

### Bezugszeichenliste

- 1: Leitungsfilter
- 2: Filtergehäuse
- 4: Filtertopf
- 6: Filterelement
- 8: Filterkopf
- 10: Zulaufanschluss
- 12: Ablaufanschluss
- 14: Innenraum
- 16: Filterlängsachse
- 18: Wandung
- 20: Filterboden
- 22: Wandungsabschnitt
- 24: Außengewinde
- 26: Dichtring
- 28: Stirnnut
- 30: Außenumfangsfläche
- 32: Innenwandungsfläche
- 34: Zulaufraum
- 36: Innenumfangsfläche
- 38: Ablaufraum
- 40: Endscheibe
- 42: Federelement
- 44: Schulterfläche
- 46a, b, c: Körperabschnitt
- 48: Bodenfläche
- 50: Endscheibenfläche
- 51: Aufnahmeraum
- 52: Kragen
- 54: Innengewinde
- 56: Anschlussachse
- 58: Zulaufkanal
- 60: Ablaufkanal
- 62: Verbindungskanal
- 64: Anschlusszapfen
- 66: Endabschnitt
- 68: Wandbohrung
- 70: Bypassventil
- 72: Verschmutzungsanzeiger
- 74: Stirnfläche
- 76: Außenkante
- 78: Seitenflanke
- 80: Seitenflanke
- 82: Bodenflächenabschnitt
- 84a, b, c: Durchlass

## Patentansprüche

1. Filtergehäuse (2) für einen Filter (1), mit einem Filtertopf (4) zur Definierung eines Innenraums (14) zur Aufnahme eines Filterelements (6) zum Abscheiden von festen Partikeln aus einem Fluid, einem Filterkopf (8) zum Verschließen des Innenraums (14), und mit einem Zulaufanschluss (10) zur Zuführung des zu filternden Fluids in den Innenraum (14) und einem Ablaufanschluss (12) zur Entnahme des gefilterten Fluids aus dem Innenraum (14), wobei der Filtertopf (4) bodenseitig in den Innenraum (14) ragende Körperabschnitte (46a, 46b, 46c) zur Auflage des Filterelements (6) hat, **dadurch gekennzeichnet, dass** die Körperabschnitte (46a, 46b, 46c) außenseitig in einen Filterboden (20) eingebrachte Einprägungen in Richtung des Innenraums (14) sind, die von außen betrachtet eine sickenartige Gestalt haben und die eine außenumfangsseitige Konturierung bilden.

2. Filtergehäuse nach Anspruch 1 wobei die Körperabschnitte (46a, 46b, 46c) gleich ausgebildet und gleichmäßig voneinander beabstandet sind.

3. Filtergehäuse nach Anspruch 1 oder 2, wobei drei Körperabschnitte (46a, 46b, 46c) vorgesehen sind.

4. Filtergehäuse nach einem der vorhergehenden Ansprüche, wobei der Filterkopf (4) einen integralen rohrartigen Anschlusszapfen (64) zum abschnittsweisen Aufschieben des Filterelementes (6) aufweist.

5. Filter (1) zum Abscheiden von festen Partikeln aus einem Fluid mit einem Filtergehäuse (2) nach einem der vorhergehenden Ansprüche und mit einem Filterelement (6), das im Innenraum (14) des Filtergehäuses (2) aufgenommen ist.

6. Filter nach Anspruch 5, wobei ein Federelement (44) zum Andrücken des Filterelements (6) gegen bodenseitige Körperabschnitte (46a, 46b, 46c) vorgesehen ist.

## Claims

1. Filter housing (2) for a filter (1), having a filter pot (4) for defining an interior space (14) for accommodating a filter element (6) for separating solid particles from a fluid, having a filter head (8) for closing off the interior space (14), and having a feed port (10) for feeding into the interior space (14) the fluid to be filtered and having a discharge port (12) for removing the filtered fluid from the interior space (14), wherein the filter pot (4) has body sections (46a, 46b, 46c) which project into the interior space (14) on the bottom side, said sections serving for supporting the filter element (6), **characterized in that** the body sections (46a, 46b, 46c) are impressions, introduced into a filter bottom (20) on the outside, in the direction of the interior space (14), which impressions, when viewed from the outside, have a bead-like shape and form an externally circumferential contouring.

2. Filter housing according to Claim 1, wherein the body sections (46a, 46b, 46c) are of identical form and are evenly spaced apart from one another.

3. Filter housing according to Claim 1 or 2, wherein three body sections (46a, 46b, 46c) are provided.

4. Filter housing according to one of the preceding claims, wherein the filter head (4) has an integral tubular connecting pin (64) for the sectional pushing-on of the filter element (6).

5. Filter (1) for separating solid particles from a fluid, having a filter housing (2) according to one of the preceding claims, and having a filter element (6) which is accommodated in the interior space (14) of the filter housing (2).

6. Filter according to Claim 5, wherein a spring element (44) is provided for pressing the filter element (6) against bottom-side body sections (46a, 46b, 46c).

## Revendications

1. Boîtier de filtre (2) pour un filtre (1), comprenant un pot de filtre (4) destiné à définir un espace interne (14) pour recevoir un élément de filtre (6) prévu pour éliminer des particules solides d'un liquide, une tête de filtre (8) prévue pour fermer l'espace interne (14) et un raccord d'alimentation (10) prévu pour alimenter le fluide à filtrer dans l'espace interne (14) et un raccord de sortie (12) pour enlever le fluide filtré de l'espace interne (14), le pot de filtre (4) présentant, du côté du fond, des portions de corps (46a, 46b, 46c) faisant saillie dans l'espace interne (14) pour supporter l'élément de filtre (6), **caractérisé en ce que** les portions de corps (46a, 46b, 46c) sont des impressions en relief dans la direction de l'espace interne (14) réalisées du côté extérieur dans un fond de filtre (20), qui, vues depuis l'extérieur, présentent une configuration en forme de moulure et forment un contour du côté de la périphérie extérieure.

2. Boîtier de filtre selon la revendication 1, dans lequel les portions de corps (46a, 46b, 46c) sont réalisées de manière identique et sont espacées uniformément les unes des autres.

3. Boîtier de filtre selon la revendication 1 ou 2, dans lequel trois portions de corps (46a, 46b, 46c) sont prévues.

4. Boîtier de filtre selon l'une quelconque des revendications précédentes, dans lequel la tête de filtre (4) présente un tourillon de raccordement tubulaire intégral (64) pour enfoncer en partie l'élément de filtre (6).

5. Filtre (1) pour éliminer des particules solides d'un fluide, comprenant un boîtier de filtre (2) selon l'une quelconque des revendications précédentes, et un élément de filtre (6) qui est reçu dans l'espace interne (14) du boîtier de filtre (2).

6. Filtre selon la revendication 5, dans lequel un élément de ressort (44) est prévu pour presser l'élément de filtre (6) contre des portions de corps (46a, 46b, 46c) du côté du fond.
